# FASCICULE DE BREVET EUROPEEN

(11) **EP 2 558 763 B1**
(45) Date de publication et mention de la délivrance du brevet: **30.03.2016**
(21) Numéro de dépôt: 11715686.9
(22) Date de dépôt: 13.04.2011
(51) Int. Cl.: F16L 37/091

(54) **DISPOSITIF DE RACCORDEMENT D'UN TUBE A UN ELEMENT DE CIRCUIT ET PROCEDE DE DEMONTAGE D'UN TEL DISPOSITIF**
VORRICHTUNG ZUR KOPPLUNG EINES ROHRS AN EIN SCHALTELEMENT UND VERFAHREN ZUR DEMONTAGE SOLCH EINER VORRICHTUNG
DEVICE FOR COUPLING A TUBE TO A CIRCUIT ELEMENT AND METHOD FOR DISMANTLING SUCH A DEVICE

(30) Priorité: 13.04.2010 FR 1052813
(43) Date de publication de la demande: 20.02.2013
(73) Titulaire: Parker Hannifin Manufacturing France SAS, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2011/055860
(87) Numéro de publication internationale: WO 2011/128390

(56) Documents cités:
- EP-A1- 1 591 709
- FR-A1- 2 873 185
- FR-A1- 2 876 613

## Description

La présente invention concerne un dispositif de raccordement d'un tube à un élément de circuit de transport de fluide, tel qu'un élément émetteur ou récepteur de fluide comme une pompe, un distributeur, un actionneur, un réservoir, un régulateur de débit ou de pression... L'invention a également pour objets un procédé de montage d'une rondelle d'ancrage sur un corps d'un tel dispositif de raccordement et un procédé de démontage d'un tel dispositif.

### ARRIERE PLAN DE L'INVENTION

On connaît des dispositifs de raccordement de type cartouche destinés à être engagés dans un canal d'un élément de circuit pour raccorder un tube ou canalisation audit canal de l'élément de circuit. Un tel dispositif est notamment connu de FR 2 873 185. Un tel dispositif comporte un corps tubulaire pourvu intérieurement de moyens d'accrochage du tube et pourvu extérieurement de moyens d'ancrage comportant des dents élastiquement déformables inclinées pour s'opposer à une extraction de la cartouche hors de son logement. Les dents sont solidaires de l'extrémité du corps la plus éloignée de l'ouverture du canal lorsque le dispositif est en place dans celui-ci. Des joints d'étanchéité sont par ailleurs fixés sur le corps de la cartouche de manière à assurer l'étanchéité du raccordement une fois la cartouche insérée dans le canal de l'élément de circuit et un tube engagé dans le dispositif.

Lors de l'insertion du dispositif dans le canal, les dents se déforment et frottent contre les parois du canal jusqu'à ce que le dispositif arrive dans sa position définitive dans le canal. L'insertion du dispositif de raccordement demande donc un effort important et relativement long. En outre, cet effort doit être exercé dès le début de l'insertion du corps dans le canal, à un moment où la longueur de guidage du corps dans le canal est faible, de sorte que le corps peut être introduit de biais si l'effort n'est pas exercé parfaitement dans l'axe. Par ailleurs, les dents provoquent des rayures sur la paroi du canal lors de l'insertion du dispositif dans le canal et détériorent donc l'état de surface de celui-ci. Cette dégradation de l'état de surface du canal altère la qualité du contact du joint avec la paroi du canal entraînant un risque de fuite. Ceci peut également engendrer une détérioration du joint par frottement de ce dernier sur la paroi du canal préalablement dégradée par les dents.

Une fois le dispositif mis en place, ce dernier ne peut plus être retiré à moins d'exercer sur le dispositif une traction suffisante pour arracher le dispositif car la position des moyens d'ancrage ne permet pas d'y accéder, le joint d'étanchéité obstruant l'accès aux dents.

Il a été envisagé des dispositifs dans lesquels la rondelle d'ancrage est positionnée de manière à s'étendre au voisinage de l'ouverture lorsque le dispositif est en place dans le puits de l'élément de circuit. La rondelle d'ancrage comporte alors une portion interne tubulaire montée serrée sur le corps du dispositif de raccordement ou bloquée axialement en position par un élément rapporté.

### OBJET DE L'INVENTION

Le but de l'invention est donc de proposer un dispositif de raccordement d'un tube à un élément de circuit, qui présente une structure simple et qui permette une mise en place facilitée.

### BREVE DESCRIPTION DE L'INVENTION

A cet effet, l'invention a pour premier objet un dispositif de raccordement d'un tube à un élément de circuit selon la revendication 1.

L'invention a également pour objet un procédé de montage de la rondelle d'ancrage sur le corps du dispositif de raccordement de l'invention et un procédé de démontage d'un dispositif du type ci-dessus.

Un tel procédé permet ainsi de facilement d'extraire le dispositif du puits.

### BREVE DESCRIPTION DES DESSINS

D'autres caractéristiques et avantages de l'invention apparaîtront à la lecture de la description qui suit de modes de réalisation particuliers de l'invention en relation avec les figures ci-jointes parmi lesquelles :
- la figure 1 est une vue en perspective d'un corps tubulaire selon l'invention ;
- la figure 2 est une vue en coupe du dispositif avant son insertion dans un puits ;
- la figure 3 est une demi vue en coupe d'une partie du corps tubulaire ;
- les figures 4a, 4b et 4c sont des demi vues en coupe schématisant les étapes de montage d'une rondelle d'ancrage sur le corps tubulaire ;
- les figures 5a, 5b et 5c sont des demi vues en coupe schématisant les étapes du démontage de la rondelle d'ancrage ;

### DESCRIPTION DETAILLEE DE L'INVENTION

Les figures représentent un corps tubulaire 1, ou cartouche, destiné à être inséré dans un puits 2 d'un élément de circuit par une ouverture 16 du puits 2. La cartouche 1 comporte sur sa paroi extérieure une rondelle d'ancrage 3 et sur sa paroi intérieure des moyens de retenue d'un tube, le tube n'étant pas représenté. La cartouche 1 comporte une première extrémité 1.1 par laquelle le corps est destiné à être engagé dans le puits 2 et une deuxième extrémité 1.2 destinée à s'étendre au voisinage de l'ouverture 16 lorsque la cartouche est dans le puits 2.

La rondelle d'ancrage 3 est composée d'une partie interne annulaire 5 à partir de laquelle s'étendent des dents 6 inclinées par rapport à un axe central de la partie annulaire 5 et dirigées vers l'ouverture 16 destinée à recevoir le tube à raccorder. La partie interne annulaire 5 a ici une section transversale rectangulaire avec un grand axe s'étendant selon une direction sensiblement perpendiculaire à l'axe central de la rondelle. La rondelle d'ancrage 3 est disposée à l'extrémité de la cartouche 1.2. Selon un mode de réalisation préféré, la partie annulaire 5 est déformable en torsion et les dents sont relativement rigides.

La cartouche 1 est composée de deux parties, à savoir une douille porte joint 7 à une extrémité de laquelle est clipsée une extrémité 8.1 d'un insert 8.

La douille 7 et l'insert 8 définissent entre eux une gorge interne de réception d'une rondelle 4 formant les moyens de retenue du tube.

L'insert 8 à une portion d'extrémité 8.2, opposée à l'extrémité 8.1, qui est pourvue extérieurement d'une gorge de réception 9 délimitée latéralement par des flancs 10 et 11. Le flanc 10 est formé d'un léger rebord qui a une hauteur suffisante pour constituer une butée à l'arrachement de la rondelle d'ancrage 3 et qui se raccorde à la face terminale de la portion d'extrémité 8.2 par une surface tronconique 17 se rétrécissant vers la face terminale. Le flanc 11 a une forme sensiblement complémentaire de la rondelle d'ancrage 3 et comprend deux surfaces tronconiques formant un dièdre concave. La surface tronconique externe est agencée pour que les dents inclinées viennent y prendre appui, les dents s'étendant radialement vers l'extérieur au-delà de l'insert 8 pour s'ancrer dans la paroi 15 du puits 2. De façon avantageuse, la largeur de la gorge de réception 9 est plus importante que l'épaisseur de la partie annulaire 5 de la rondelle d'ancrage 3.

Selon un mode de réalisation préféré, la portion d'extrémité 8.2 reçoit à coulissement, de façon connue en elle-même, un organe tubulaire de déconnexion 12, tel qu'un poussoir, s'étendant de l'extérieur de la cartouche 1, par une extrémité de manoeuvre, jusqu'à la rondelle d'accrochage 4, par un nez agencé pour soulever les dents de ladite rondelle d'accrochage 4 lorsque le poussoir 12 est enfoncé. Le poussoir 12 et l'insert 8 sont pourvues de butées complémentaires 13, 14 disposées en regard l'une de l'autre pour s'opposer au retrait du poussoir 12.

Le montage de la cartouche 1 dans le puits 2 est réalisé de manière classique. L'inclinaison des dents 6 facilitée par la largeur de la gorge de réception 9 permet la libre torsion de la partie annulaire 5. Une fois la cartouche 1 insérée, les dents 6 sont ancrées dans la paroi 15 du puits 2.

On notera que le positionnement de la rondelle d'ancrage 3 à l'extrémité 1.2 de la cartouche 1 permet d'une part de limiter le frottement des dents 6 sur la paroi 15 du puits 2 lors de l'insertion de la cartouche 1 dans le puits 2 et d'autre part de rendre la rondelle d'ancrage 3 accessible à un homme du métier.

Le tube est raccordé de façon classique à la cartouche 1 et une déconnexion du tube est possible par enfoncement du poussoir 12.

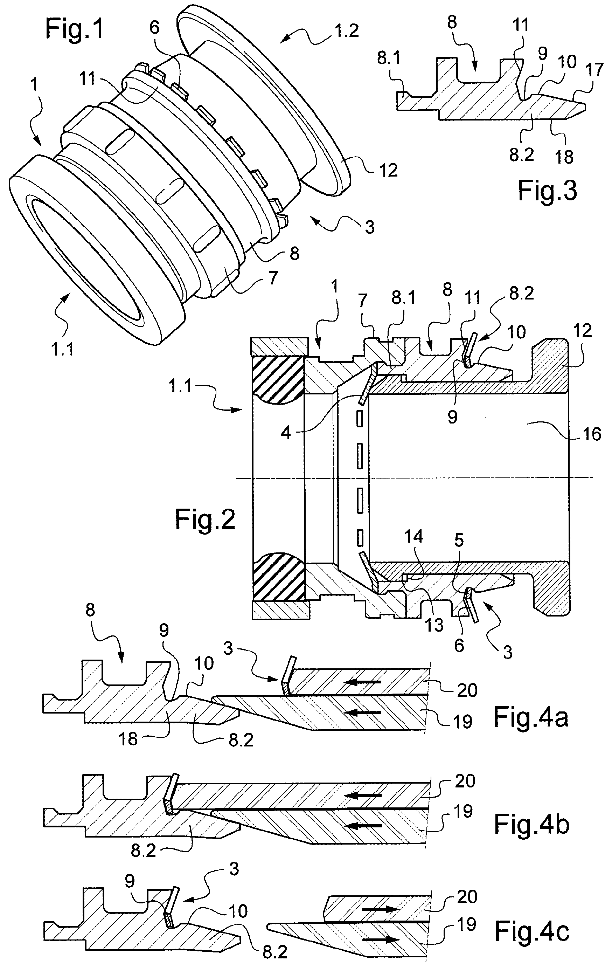

Les figures 4a, 4b et 4c illustrent le montage de la rondelle 3 sur l'insert 8.

La figure 4a montre la première étape permettant la mise en place de la rondelle 3 dans la gorge 9. Lorsque l'insert 8 est au repos, non déformée, l'insertion de la rondelle 3 jusqu'à la gorge 9 n'est pas possible du fait du rayon défini par la butée 10 qui est supérieur à celui de la rondelle 3. Par conséquent, on utilise un outil 19 qui exerce une pression sur la surface tronconique 17 déformant ainsi l'insert 8 au niveau du goulot d'étranglement 18. Le rayon défini par la butée 10 est alors plus petit que celui de la rondelle 3.

La figure 4b illustre la mise en place de la rondelle 3 dans la gorge 9. Pendant que l'outil 19 maintient l'insert 8 dans son état déformé, un deuxième outil 20, disposé à coulissement sur l'outil 19, positionne la rondelle 3 dans la gorge de réception 9.

Une fois la rondelle 3 placée, les outils 19 et 20 sont retirés, comme illustré en figure 4c, et la butée 10 vient alors emprisonner la rondelle 3 dans la gorge de réception 9.

En variante, l'outil 19 peut ne pas intervenir dans la mise en place de la rondelle 3. Avantageusement, le positionnement de la rondelle 3 dans la gorge 9 sera réalisé à l'aide de l'outil 19 lorsque la partie annulaire 5 de la rondelle d'ancrage 3 est de faible section et que cette dernière est susceptible d'être détériorée lors de son positionnement.

L'insert 8 est réalisé en un matériau élastique. La gorge de réception 9 et la paroi interne de l'insert 8 définissent un goulot d'étranglement 18 autorisant une déformation de la portion d'extrémité 8.2 de l'insert 8 pour permettre le passage de la rondelle d'ancrage 3.

Le poussoir 12 est monté ensuite.

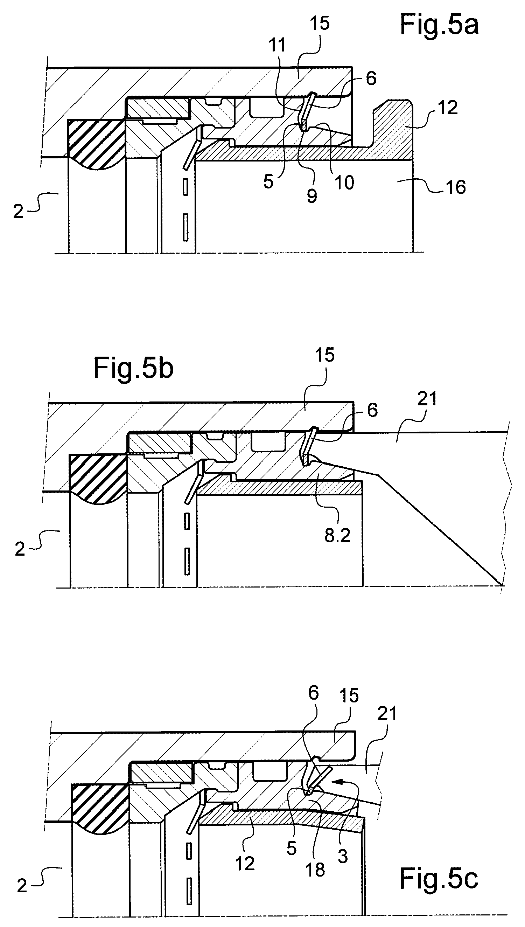

Les figures 5a, 5b et 5c illustrent le démontage de la rondelle d'ancrage 3.

La figure 5a représente une partie du dispositif de raccordement selon l'invention dans laquelle les dents 6 de la rondelle 3 sont ancrées dans la paroi 15 et la partie annulaire 5 de la rondelle d'ancrage 3 est emprisonnée dans la gorge 9 par la butée 10.

Après avoir découpé l'extrémité de manoeuvre du poussoir 12, l'extrémité d'une pince 21 est introduite entre deux dents 6 de la rondelle d'ancrage 3. Les extrémités de la pince 21 prennent alors appui sur le flanc supérieur de la partie annulaire 5 de la rondelle comme illustré à la figure 5b.

Ainsi, en actionnant la pince 21, la partie annulaire 5, le goulot d'étranglement 18 de la rondelle 3 et la paroi du poussoir 12 se déforment autorisant le dégagement des dents 6 par basculement de la partie annulaire 5 et l'extraction de la rondelle d'ancrage 3 par le rétreint de la portion d'extrémité 8.2 (figure 5c).

Les opérations illustrées aux figure 5b et 5c peuvent être répétées si nécessaire jusqu'à totale extraction de la rondelle d'ancrage 3.

Bien entendu, l'invention n'est pas limitée au mode de réalisation décrit ci-dessus et est susceptible de variantes qui apparaîtront à l'homme de métier sans sortir du cadre de l'invention tel que défini par les revendications.

Notamment, bien que la rondelle représentée soit composée d'une partie annulaire flexible en torsion et de dents rigides, il est possible de prévoir des dents flexibles s'arc-boutant lorsque la cartouche subit une force d'extraction hors du puits.

De même, bien que la cartouche soit représentée par une douille 7 prolongée d'un insert 8, la cartouche peut être réalisée d'un seul tenant.

Bien que les moyens de retenue décrits comprennent une rondelle d'accrochage, d'autres moyens de retenue sont envisageables, comme une pince pourvue de bras élastiquement déformable ou un verrou mobile radialement.

Enfin, bien que l'organe de déconnection 12 permettant de soulever les dents de la rondelle d'accrochage 4 soit ici représenté par un poussoir, il n'est pas contraire à l'invention de substituer à cet agencement un organe de déconnection 12 différent assurant la même fonction, tel que le manchon tubulaire de déconnexion prolongeant, à l'extérieur du corps, une pince formant le moyen de retenue du tube.

## Revendications

1. Dispositif de raccordement d'un tube à un élément de circuit, comprenant un corps tubulaire (1) de type cartouche pourvu extérieurement d'une rondelle d'ancrage (3) du corps dans un puits (2) de l'élément de circuit et pourvu intérieurement de moyens de retenue (4) du tube, **caractérisé en ce que** la rondelle d'ancrage (3) est montée sur une portion d'extrémité (8) du corps tubulaire (1) destinée à s'étendre au niveau de l'ouverture (16) du puits lorsque le dispositif de raccordement est en service, la portion d'extrémité (8) étant élastiquement déformable entre un état déformé permettant une mise en place de la rondelle (3) sur le corps et un état de repos assurant un maintien de la rondelle (3) sur le corps, et dans lequel la portion d'extrémité du corps tubulaire (1) reçoit un organe de déconnection (12) coulissant coopérant avec les moyens de retenue (4) pour amener les moyens de retenue (4) dans un état de libération du tube, la portion d'extrémité étant agencée de telle manière que dans son état de repos la portion d'extrémité reçoive l'organe de déconnection, à savoir un poussoir avec un jeu radial.

2. Dispositif selon la revendication 1, dans lequel ladite portion d'extrémité (8) du corps tubulaire (1) comprend une gorge de réception (9) de la rondelle d'ancrage (3).

3. Dispositif selon la revendication 2, dans lequel une surface tronconique (17) s'étend depuis une face terminale de la portion d'extrémité (8) jusqu'à la gorge (9) en s'évasant vers cette dernière.

4. Dispositif selon l'une des revendications précédentes, dans lequel le corps tubulaire (1) comprend un corps principal (7) pourvu d'un élément d'étanchéité, les moyens de retenue comprenant une rondelle d'accrochage (4) prisonnière dans un logement délimité par le corps principal (7) et la portion d'extrémité (8).

5. Dispositif selon l'une des revendications précédentes, dans lequel le corps tubulaire (1) comporte un épaulement annulaire (11) externe offrant une surface d'appui à la rondelle d'ancrage (3) d'un côté de la rondelle opposé à l'ouverture (16) du puits et ayant une circonférence externe en retrait d'une circonférence externe de la rondelle (3).

6. Dispositif selon la revendication 5, dans lequel l'épaulement annulaire (11) externe a une forme sensiblement complémentaire de la rondelle d'ancrage (3).

7. Procédé de montage d'une rondelle d'ancrage sur un corps tubulaire d'un dispositif de raccordement conforme à l'une quelconque des revendications précédentes, comprenant les étapes d'amener une portion d'extrémité (8) du corps tubulaire dans un état de déformation élastique et d'engager la rondelle d'ancrage (3) sur ladite portion d'extrémité (8).

8. Procédé selon la revendication 7, dans lequel l'état de déformation élastique est provoqué par un premier outil (19) exerçant une pression sur la portion d'extrémité (8), la rondelle (3) est ensuite engagée sur la portion d'extrémité (8) par un deuxième outil (20) de forme complémentaire à la rondelle (3) et disposé à coulissement sur le premier outil.

9. Procédé de démontage d'un dispositif de raccordement d'un tube à un élément de circuit selon l'une des revendications 1 à 6, **caractérisé en ce que** le procédé comprend l'étape d'introduire un outil (21) dans l'ouverture (16) du puits de manière à rétreindre la portion d'extrémité (8) du corps tubulaire (1) et permettre le dégagement de la rondelle d'ancrage (3).

10. Procédé selon la revendication 9, dans lequel le corps tubulaire recevant un organe de déconnection (12) ayant une extrémité de manoeuvre en saillie axiale et radiale du corps tubulaire (1), le procédé comprend une étape préalable de découpage de ladite extrémité de manoeuvre.

## Patentansprüche

1. Verbindungsvorrichtung zur Verbindung eines Rohres mit einem Kreislaufelement, umfassend ein rohrförmiges Gehäuse (1) nach Art einer Kartusche, das außen mit einer Verankerungsringscheibe (3) zur Verankerung des Gehäuses in einer Bohrung (2) des Kreislaufelements und innen mit Rückhaltemitteln (4) zum Rückhalten des Rohres versehen ist, **dadurch gekennzeichnet, dass** die Verankerungsringscheibe (3) an einem Endabschnitt (8) des rohrförmigen Gehäuses (1) angebracht ist, der dazu bestimmt ist, sich im Bereich der Öffnung (16) der Bohrung zu erstrecken, wenn die Verbindungsvorrichtung im Gebrauch ist, wobei der Endabschnitt (8) elastisch zwischen einem verformten Zustand, der ein Anbringen der Ringscheibe (3) auf dem Gehäuse ermöglicht, und einem Ruhezustand verformbar ist, der ein Halten der Ringscheibe (3) auf dem Gehäuse sicherstellt, und wobei der Endabschnitt des rohrförmigen Gehäuses (1) ein verschiebbares Trennorgan (12) aufnimmt, das mit den Rückhaltemitteln (4) zusammenwirkt, um die Rückhaltemittel (4) in einen Freigabezustand zur Freigabe des Rohres zu bringen, wobei der Endabschnitt derart ausgebildet ist, dass er in seinem Ruhezustand das Trennorgan aufnimmt, nämlich einen Stößel mit einem radialen Spiel.

2. Vorrichtung nach Anspruch 1, wobei der genannte Endabschnitt (8) des rohrförmigen Gehäuses (1) eine Aufnahmenut (9) zur Aufnahme der Verankerungsringscheibe (3) umfasst.

3. Vorrichtung nach Anspruch 2, wobei sich eine kegelstumpfförmige Fläche (17) ab einer Stirnfläche des Endabschnittes (8) bis zur Nut (9) erstreckt und dabei in Richtung dieser letztgenannten weiter wird.

4. Vorrichtung nach einem der vorhergehenden Ansprüche, wobei das rohrförmige Gehäuse (1) ein Hauptgehäuse (7) umfasst, das mit einem Dichtungselement versehen ist, wobei die Rückhaltemittel eine Ringscheibe (4) zum Festhalten umfassen, die in einer Aufnahme gefangen ist, die von dem Hauptgehäuse (7) und dem Endabschnitt (8) begrenzt ist.

5. Vorrichtung nach einem der vorhergehenden Ansprüche, wobei das rohrförmige Gehäuse (1) eine äußere ringförmige Schulter (11) umfasst, die eine Auflagefläche für die Verankerungsringscheibe (3) auf einer Seite der Ringscheibe bietet, die der Öffnung (16) der Bohrung abgewandt ist, und einen Außenumfang hat, der von einem Außenumfang der Ringscheibe (3) zurückgesetzt ist.

6. Vorrichtung nach Anspruch 5, wobei die äußere ringförmige Schulter (11) eine zur Verankerungsringscheibe (3) im Wesentlichen komplementäre Form hat.

7. Verfahren zur Montage einer Verankerungsringscheibe (3) auf einem rohrförmigen Gehäuse einer Verbindungsvorrichtung nach einem der vorhergehenden Ansprüche, umfassend die Schritte des Bringens eines Endabschnittes (8) des rohrförmigen Gehäuses in einen Zustand elastischer Verformung und des Aufsteckens der Verankerungsringscheibe (3) auf den genannten Endabschnitt (8).

8. Verfahren nach Anspruch 7, wobei der Zustand elastischer Verformung durch ein erstes Werkzeug (19) hervorgerufen wird, das einen Druck auf den Endabschnitt (8) ausübt, wobei die Ringscheibe (3) anschließend durch ein zweites Werkzeug (20) mit zur Ringscheibe (3) komplementärer Form auf den Endabschnitt (8) aufgesteckt und verschiebbar auf dem ersten Werkzeug angeordnet wird.

9. Verfahren zur Demontage einer Verbindungsvorrichtung zur Verbindung eines Rohres mit einem Kreislaufelement nach einem der Ansprüche 1 bis 6, **dadurch gekennzeichnet, dass** das Verfahren den Schritt des Einführens eines Werkzeugs (21) in die Öffnung (16) der Bohrung umfasst, derart, dass der Endabschnitt (8) des rohrförmigen Gehäuses (1) reduziert und das Lösen der Verankerungsringscheibe (3) ermöglicht wird.

10. Verfahren nach Anspruch 9, wobei, wenn das rohrförmige Gehäuse ein Trennorgan (12) aufnimmt, das ein axial und radial vom rohrförmigen Gehäuse (1) vorstehendes Betätigungsende hat, das Verfahren einen vorherigen Schritt des Abschneidens des genannten Betätigungsendes umfasst.

## Claims

1. Device for connecting a tube to a circuit element, including a cartridge type tubular body (1) provided externally with a washer (3) for anchoring the body in a well (2) of the circuit element and provided internally with means (4) for retaining the tube, **characterized in that** the anchor washer (3) is mounted on an end portion (8) of the tubular body (1) designed to lie at the level of the opening (16) of the well when the connecting device is in use, the end portion (8) being elastically deformable between a deformed state enabling the washer (3) to be placed on the body and a rest state for retaining the washer (3) on the body and wherein the end portion of the tubular body (1) receives a sliding disconnection member (12) cooperating with the retaining means (4) to bring the retaining means (4) into a state releasing the tube, the end portion being adapted so that in its rest state the end portion receives the disconnection member, namely a plunger with a radial clearance.

2. Device according to Claim 1, wherein said end portion (8) of the tubular body (1) includes a groove (9) for receiving the anchor washer (3).

3. Device according to Claim 2, wherein a frustoconical surface (17) extends from an end face of the end portion (8) as far as the groove (9), widening toward the latter.

4. Device according any one of the preceding claims, wherein the tubular body (1) includes a main body (7) provided with a sealing member, the retaining means including an attachment washer (4) trapped in a housing delimited by the main body (7) and the end portion (8).

5. Device according to any one of the preceding claims, wherein the tubular body (1) includes an external annular shoulder (11) offering a bearing surface to the anchor washer (3) on a side of the washer opposite the opening (16) of the well and having an external circumference set back from an external circumference of the washer (3).

6. Device according to claim 5, wherein the external annular shoulder (11) has a shape substantially complementary to the anchor washer (3).

7. Method of mounting an anchor washer on a tubular body of a connecting device according to any one of the preceding claims, including the steps of bringing an end portion (8) of the tubular body to a state of elastic deformation and engaging the anchor washer (3) over said end portion (8).

8. Method according to Claim 7, wherein the state of elastic deformation is brought about by a first tool (19) exerting pressure on the end portion (8), after which the washer (3) is engaged over the end portion (8) by a second tool (20) of complementary shape to the washer (3) and disposed on the first tool to slide thereon.

9. Method of demounting a device according to any one of Claims 1 to 6 for connecting a tube to a circuit element, **characterized in that** the method includes the step of introducing a tool (21) into the opening (16) of the well so as to reduce the size of the end portion (8) of the tubular body (1) and enable disengagement of the anchor washer (3).

10. Method according to Claim 9, wherein the tubular body receiving a disconnection member (12) having a manoeuvring end projecting axially and radially from the tubular body (1), the method includes a preliminary step of cutting off said manoeuvring end.
